# EUROPÄISCHE PATENTSCHRIFT

(11) **EP 4 387 754 B1**
(45) Veröffentlichungstag und Bekanntmachung des Hinweises auf die Patenterteilung: **25.12.2024**
(21) Anmeldenummer: 22802928.6
(22) Anmeldetag: 12.10.2022
(51) Int. Cl.: B01D 29/35, B01D 29/66, E04H 4/12, F04B 53/20, F04D 1/00, F04D 29/70

(54) **FILTERVORRICHTUNG UND PUMPENVORRICHTUNG HIERMIT**
FILTER DEVICE AND PUMP DEVICE THEREWITH
DISPOSITIF DE FILTRATION ET DISPOSITIF DE POMPE LE COMPORTANT

(30) Priorität: 12.10.2021 DE 202021105521 U
(43) Veröffentlichungstag der Anmeldung: 26.06.2024
(73) Patentinhaber: Herborner Pumpentechnik GmbH & Co KG, 35745 Herborn (DE)
(72) Erfinder: KORUPP, Sascha, 35614 Aßlar-Werdorf (DE)
(74) Vertreter: Patentanwälte Olbricht Buchhold Keulertz
(86) Internationale Anmeldenummer: PCT/EP2022/078435
(87) Internationale Veröffentlichungsnummer: WO 2023/062097

(56) Entgegenhaltungen:
- AU-B2- 632 237
- CN-U- 201 988 255
- US-A- 1 438 983

## Beschreibung

Die Erfindung betrifft eine Filtervorrichtung gemäß Anspruch 1 und eine Pumpenvorrichtung hiermit nach Anspruch 16.

Pumpenvorrichtungen, die Schmutzwasser fördern, so beispielsweise Badewasserpumpen, weisen üblicherweise einen Vorfilter auf. Diese Filtervorrichtung vor dem Laufrad einer Pumpe soll grobe Verschmutzungen zurückhalten und damit die Pumpe als solche und andere der Pumpe nachgeschaltete Leitungsabschnitte und hierin angeordnete Vorrichtungen vor Schäden und Verstopfung schützen.

Solche der Pumpe vorgeschalteten Filtervorrichtungen müssen regelmäßig gereinigt werden, im Badebetrieb von Schwimmbädern bspw. mindestens einmal täglich. Bei Freibädern teilweise deutlich häufiger. Dazu muss die Brauchwasserleitung in einem Abschnitt, in dem sich die Filtervorrichtung befindet, vollständig entleert werden. Erst anschließend kann das Filtergehäuse geöffnet und der darin befindliche Filterkorb bzw. Filtersieb zur Reinigung entnommen werden.

Die vor der eigentlichen Reinigung des Filterkorbs vorzunehmende Entleerung von Teilen der mit der Pumpe verbundenen Leitung inklusive dem Filtergehäuse nimmt viel Zeit in Anspruch und es geht Wasser sowie dessen gespeicherte Heizenergie und Wasserchemie verloren.

EP 2 787 149 B1 schlägt für eine effizientere Reinigung eines Vorfilters eine Vorrichtung zum pneumatischen Entleeren einer Brauchwasserleitung mit einer Pumpe vor, wobei die Pumpe Teil eines Badewasserkreislaufs ist und ein Vorfilter vor dieser angeordnet ist. Ein Sperrschieber ist vor dem Vorfilter und ein weiterer Sperrschieber hinter der Pumpe angeordnet, um den Badewasserkreislauf zu unterbrechen. Zusätzlich ist eine Druckluftquelle über ein regelbares Ventil und eine Einblaseinrichtung mit der Brauchwasserleitung im Bereich zwischen den Sperrschiebern verbunden. Durch Einblasen von Luft in diesen abgesperrten Bereich lässt sich das zwischen den Sperrschiebern eingeschlossene Fluid durch eine Abführeinrichtung mit steuerbarem Ventil herausdrücken. Anschließend wird ein Deckel des Vorfilters händisch geöffnet, der Filterkorb entnommen, gereinigt und wieder eingesetzt. Nachteilhaft erweist sich hierbei, dass weiterhin händische Arbeit zu leisten ist, während der beispielsweise ein Bademeister keine Schwimmaufsicht leisten kann.

Aus AU 632 237 B2 ist ein Filtergehäuse mit einem vertikal ausgerichteten Filterkorb bekannt, der bis zur unteren Abschlusskante Durchtrittslöcher aufweist. Der Filterkorb ist unten und oben offen ausgestaltet. Auch aus US 1 438 983 A ist eine Filtervorrichtung mit einem vertikal ausgerichteten Filterkorb in einem Filtergehäuse bekannt.

In CN 201 988 255 U ist eine Filtervorrichtung mit einem Filterkorb in einem Filtergehäuse beschrieben. Der Filterkorb ist horizontal ausgerichtet und weist über den gesamten Umfang Durchtrittslöcher auf. Der Filterkorb ist endseitig mit einem Deckelelement verschlossen. In diesem Deckelelement ist im unteren Bereich eine Auslassöffnung in Form eines Rohrstutzens vorgesehen, der horizontal vom Filterkorb wegführt.

Der Erfindung liegt daher die Aufgabe zugrunde, die vorgenannten und weitere Nachteile des Standes der Technik zu überwinden und eine Lösung zur Verfügung zu stellen, die das schnelle, kostengünstige und effiziente Reinigen einer Filtervorrichtung ermöglicht.

Hauptmerkmale der Erfindung in den Ansprüchen 1 und 16 angegeben. Ausgestaltungen sind Gegenstand der Ansprüche 2 bis 15.

Die Erfindung betrifft eine Filtervorrichtung mit einem Filtergehäuse, in dem ein Filterkorb bzw. ein Filtersieb mit Durchtrittslöchern angeordnet ist, wobei ein Filterzulauf des Filtergehäuses in einen Innenraum des Filterkorbs einmündet und ein Filterablauf des Filtergehäuses von einer Außenseite des Filterkorbs wegführt. Dabei ist vorgesehen, dass der Filterkorb eine Ablassöffnung aufweist, die in eine Ablassöffnung des Filtergehäuses mündet, wobei der Innenraum des Filterkorbs über diese Ablassöffnungen mit einer Ablassleitung strömungsverbunden ist, und wobei in der Ablassleitung eine Ablass-Absperreinheit angeordnet ist, sodass durch Betätigung der Ablass-Absperreinheit ein Fluid (gasförmig oder flüssig) aus dem Innenraum des Filterkorbs über die Ablassleitung ablassbar ist. Weiterhin ist vorgesehen, dass der Filterkorb geodätisch horizontal ausgerichtet ist und in einem geodätisch unten angeordneten Bereich keine Durchtrittslöcher aufweist; und/oder dass die Ablassöffnung des Filterkorbs ein Loch in einer umfangsseitigen Wandung des Filterkorbs ist.

Mit Hilfe der Ablassöffnungen ist es nunmehr nicht mehr erforderlich das Filtergehäuse zu öffnen und den Filterkorb zum Reinigen zu entnehmen. Vielmehr kann vom Filterkorb zurückgehaltener Filterschmutz aus dem Innenraum des Filterkorbs abgelassen werden. Fluid, das abgelassen wird, transportiert den Filterschmutz mit. Bevorzugt ist die Ablass-Absperreinheit zu deren Betätigung elektrisch angesteuert. Die Ablassöffnung, der Filterzulauf und der Filterablauf sollten jeweils unterschiedliche Öffnungen im Filtergehäuse sein.

Absperreinheiten im Sinne dieser Schrift sind alle Bauteile oder Baugruppen zur Absperrung oder Steuerung des Durchflusses von Fluiden (Flüssigkeiten oder Gasen). Mit anderen Worten sind dies sämtliche Vorrichtungen, mit denen ein Volumenstrom in einer Leitung reduziert oder gestoppt werden kann. Dazu gehören unter anderem Absperrschieber, Flachschieber, Kolbenschieber, Absperrklappen, Ringklappen, Absperrhähne, Dreiweg-Drehschieber, Kugelhähne, Ventile, Eckventile, Geradesitzventile, Membranventile, Klappen, Schieber, Sperrschieber, Drosseln, Magnetventile, etc.

Gemäß einer näheren Ausgestaltung der Filtervorrichtung sind der Filterzulauf und die Ablassöffnungen an gegenüberliegenden Endbereichen des Filterkorbs angeordnet. Damit kann der Filterkorb ausgehend vom Zulauf hin zur Ablassöffnung gespült werden.

Erfindungsgemäß ist die Ablassöffnung ein Loch in einer umfangsseitigen Wandung des Filterkorbs. Das erlaubt bspw. eine Sichtprüfung der Verschmutzung mit einem Schauglas auf der Seite der Korböffnung.

Der Filterkorb kann in bestimmten erfindungsgemäßen Varianten geodätisch vertikal angeordnet sein. Dann liegt der Filterzulauf vorzugsweise oben und die Ablassöffnung am unteren Ende des Filterkorbes. Schmutz sammelt sich so im Bereich der Ablassöffnung im Innenraum des Filterkorbs und ist leicht ausspülbar. Der Filterablauf kann seitlich vom Filterkorb wegführen.

In einer der erfindungsgemäßen Ausgestaltungen ist der Filterkorb geodätisch horizontal ausgerichtet. Hierdurch ist die Filtervorrichtung kompakter mit vertikal aufgestellten Pumpen kombinierbar, insbesondere unterhalb von solch einer anordenbar. In diesen erfindungsgemäßen Ausgestaltungen weist der Filterkorb in einem geodätisch unten angeordneten Bereich keine Durchtrittslöcher auf. Filterschmutz der sich hier ablagert lässt sich leicht aus dem Innenraum spülen, zumindest auch abschnittsweise in horizontaler Richtung. Im unteren Bereich wirkt der Filterkorb insbesondere wie ein Kanalboden, indem sich insbesondere nichts verhaken kann. Bevorzugt ist die Ablassöffnung im dem geodätisch unten angeordneten Bereich des Filterkorbs ausgebildet, in dem keine Durchtrittslöcher ausgebildet sind. Dadurch kann der Schmutz entlang dieses Bereichs zur Ablassöffnung gespült werden.

Für ein möglichst hindernisfreies Ablassen bietet sich eine Ausgestaltung an, gemäß der die Ablassöffnungen fluchtend zueinander angeordnet sind. Daraus resultiert ein direkter, gerader Weg vom Innenraum des Filterkorbs in die Ablassleitung.

Bevorzugt sind die Ablassöffnungen geodätisch nach unten ausgerichtet. Die Erdanziehungskraft unterstützt so das Ansammeln von Filterschmutz im Bereich der Ablassöffnung und das Verlassen des Innenraums durch die Ablassöffnungen, wodurch wenig Fluid zum Ablassen des Filterschmutzes notwendig ist. Dazu kann auch eine Ausführung beitragen, gemäß der die Ablassleitung geodätisch unten an der Ablassöffnung des Filtergehäuses angeordnet ist.

Optional kann ein Leitelement im Filterkorb angeordnet sein, das insbesondere derart ausgestaltet ist, dass es Fluid und/oder Schmutzstoffe in Richtung der Ablassöffnung lenkt. Ohne solch ein Leitelement kann es je nach Ausgestaltung zu einem Aufstauen von Schmutzstoffen kommen, was durch Umlenken am Leitelement verhindert wird. Das Leitelement kann sowohl als metallisches (bspw. gewalztes, gekantetes) Bauteil ausgeführt oder als Einsatz (auch Kunststoff) ausgeführt sein.

Bei einer näheren Ausgestaltung ist im Filterzulauf oder einer hieran angeschlossenen Zuleitung eine Zulauf-Absperreinheit angeordnet. Damit kann bei Bedarf der Zulauf temporär reduziert oder geschlossen werden, insbesondere während des Ablassens der Schmutzstoffe. Die Zulauf-Absperreinheit ist zu deren Betätigung vorzugsweise elektrisch angesteuert. Damit lässt sich der Zulauf über die Zuleitung oder ein etwaiges Rücklaufen automatisch gesteuert drosseln oder unterbrechen.

Weiterhin kann optional im Filterablauf oder einer hieran angeschlossenen Ableitung eine Ablauf-Absperreinheit angeordnet sein. Damit kann bei Bedarf der Ablauf über die Ableitung temporär reduziert oder geschlossen werden, insbesondere während des Ablassens der Schmutzstoffe. Die Ablauf-Absperreinheit ist zu deren Betätigung vorzugsweise elektrisch angesteuert. Damit lässt sich der Ablauf über die Ableitung oder ein etwaiges Rücklaufen automatisch gesteuert drosseln oder unterbrechen.

Im Speziellen kann das Fluid, das aus dem Innenraum über die Ablass-Absperreinheit abgelassen wird, (a) von dem Filterzulauf durch den Innenraum des Filterkorbs strömen, ohne die Durchtrittslöcher zu passieren, und/oder (b) von dem Filterablauf durch die Durchtrittslöcher in den Innenraum und von dort zu der Ablassleitung strömen, und/oder (c) ein in das Filtergehäuse eingeleitetes sonstiges Fluid sein. Hierdurch bestehen mehrere Optionen Filterverschmutzungen zu lösen und zur Ablassleitung zu spülen. Ein rückwärtsgerichtetes Durchspülen der Durchtrittslöcher reinigt insbesondere auch diese. Ein Durchströmen von der Zuleitung her ist besonders energiereich bzw. wuchtig, und zur Entfernung großer Schmutzportionen im Filterkorb geeignet. Durch Einleiten eines sonstigen Fluids kann das Ablassen der Schmutzstoffe auch ohne oder mit wenig des zu filternden Fluids gelingen. Denkbar sind beispielsweise ein Ausblasen von Schmutzstoffen mit Luft oder ein Ausspülen mit nicht eingestelltem Wasser, z.B. kaltes Leitungswasser. Chemisch eingestelltes und temperiertes Badewasser wird so beispielsweise bei einem Einsatz im Schwimmbad eingespart.

In einer speziellen Ausführungsform mündet eine Einblaseinrichtung über eine Einblasöffnung in das Filtergehäuse ein, mit der durch Einblasen eines Einblasfluids ein Fluid aus dem Filtergehäuse in den Filterzulauf und/oder den Filterablauf und/oder die Ablassleitung drückbar ist. Je nachdem, welche Leitung man beim Einblasen sperrt bzw. freigibt, strömt das Fluid aus dem Filtergehäuse. Auf diese Weise kann man auch vor dem Ablassen der Schmutzstoffe das Fluid zunächst in die Zuleitung und/oder Ableitung treiben und dann bspw. den evakuierten Zwischenraum davon trennen. Durch weiteres Einblasen können die Schmutzstoffe ausgeblasen werden. Alternativ wäre auch ein Einleiten von Spülfluid wie Kaltwasser denkbar. Soweit die Pumpe unter dem Fluidspiegel des Pumpkreislaufs angeordnet ist, können sowohl das Einblasfluid oder das Spülfluid durch Öffnen der Zuleitung und/oder Ableitung in die Ablassöffnung gedrückt werden. In den meisten Schwimmbädern steht hierzu eine relativ hohe Wassersäule mit entsprechend hohem Druck zur Verfügung, sodass die Schmutzstoffe effektiv aus dem Filterkorb gedrückt werden.

Optional kann die Ablass-Absperreinheit zu deren Betätigung und die Einblaseinrichtung zum Einblasen derart elektrisch angesteuert sein, dass die Ablass-Absperreinheit nach oder während des Einblasens geöffnet wird. Damit wird erreicht, dass der Innenraum von dem eigentlich gefilterten Fluid freigedrückt wird und/oder die Schmutzstoffe nach dem Öffnen der Ablass-Absperreinheit mit dem Druck der Einblaseinrichtung durch die Ablassleitung befördert werden. So sieht insbesondere eine optionale Ausgestaltung der Filtervorrichtung vor, dass die Einblaseinrichtung derart angesteuert ist, dass Fluid durch Einblasen des Einblasfluids zunächst aus dem Filtergehäuse in den Filterzulauf und/oder den Filterablauf gedrückt wird, vorzugsweise in den Filterzulauf, bevor die Ablass-Absperreinheit geöffnet wird. Die Filterreinigung kommt so mit einem geringen Volumen des Fluids aus.

Im Speziellen ist die Filtervorrichtung dazu ausgestaltet, dass das Fluid, das aus dem Innenraum über die Ablass-Absperreinheit abgelassen wird,
- von dem Filterzulauf durch den Innenraum des Filterkorbs strömt, ohne die Durchtrittslöcher zu passieren, und/oder
- von dem Filterablauf durch die Durchtrittslöcher in den Innenraum und von dort zu der Ablassleitung strömt, und/oder
- von der Einblaseinrichtung in das Filtergehäuse eingeblasenes Einblasfluid ist.

Durch Abstimmungen dieser unterschiedlich wirkenden Reinigungsströme an den konkreten Anwendungsfall lassen sich so die Effizienz und Fluidverluste der Reinigung optimieren.

Gemäß einer besonderen Ausgestaltungsform ist die Einblasöffnung strömungstechnisch zwischen den Durchtrittslöchern des Filterkorbs und dem Filterablauf angeordnet. Hierdurch können die Durchtrittslöcher rückwärts in Richtung der Ablassöffnung freigeblasen bzw. freigedrückt werden, insbesondere auch mit schlagartigem und/oder hohem Druck.

Bevorzugt weist die Einblasvorrichtung einen Kompressor auf. Damit gelingt das Einblasen automatisch.

In einer Variante der Filtervorrichtung weist diese eine Entlüftungseinrichtung auf, mit der Luft und/oder ein Einblasfluid aus dem Filtergehäuse ablassbar ist. Damit kann eine nichtselbstansaugende Pumpe genutzt werden und Schäden an der Pumpe durch Trockenlauf werden vermieden. Optional kann die Entlüftungseinrichtung an das Filtergehäuse, den Filterablauf oder den Filterzulauf angeschlossen ist. Davon bevorzugt ist der Filterablauf, insbesondere, wenn die Filtervorrichtung als Vorfilter einer Pumpe eingesetzt ist.

Gemäß einer Variante ist das Filtergehäuse teilweise durch ein Vorsatzgehäuse ausgebildet, wobei die Ablassöffnung des Filtergehäuses im Vorsatzgehäuse ausgebildet ist. Damit ist es möglich, Filtervorrichtungen ohne Ablass einfach dadurch zu modifizieren, dass deren Filterdeckel durch das Vorsatzgehäuse und optional einen längeren Filterkorb ersetzt wird. Damit ist der Ablass nachrüstbar.

Optional weist das Vorsatzgehäuse ein Schauglas auf, durch das insbesondere ein Blick in den Innenraum des Filterkorbs freigegeben ist. Durch Sichtprüfung kann so ein Reinigen des Filterkorbes veranlasst werden, oder aber eine manuelle Reinigung erfolgen.

Vorteilhafterweise ist das Vorsatzgehäuse derart in mehreren Winkelpositionen festlegbar, dass die Ablassöffnung geodätisch nach unten oder zur Seite weisend ausgerichtet ist. Soweit die Einbausituation die Ausrichtung nach unten nicht zulässt, kann hierdurch auf einfache Weise auch eine Ausrichtung der Ablassöffnung zur Seite hin umgesetzt werden.

Vorzugsweise weist das Filtergehäuse, vorzugsweise das Vorsatzgehäuse, einen Filterdeckel auf, durch den der Filterkorb entnehmbar ist. Damit kann der Filterkorb auch manuell gereinigt werden, was in größeren Abständen vor allem bei Belastungen mit langfaserigem Schmutz wie Haaren notwendig sein kann.

Im Speziellen kann der Filterzulauf auf einer Seite des Filterkorbs in dessen Innenraum münden, die dem Filterdeckel gegenüberliegt. Auf diese Weise geht der Fluidstrom längs durch den Filterkorb und treibt beim Ablassen auch den Schmutz in diese Richtung. Potentielle Verstopfungen oder Verklumpungen gelangen so in die Nähe des Deckels, wo sie im Zweifel händisch entfernbar sind.

Bei einer besonderen Ausgestaltung ist vorgesehen, dass sich der Filterkorb röhrenförmig zwischen dem Filterdeckel und dem Filterzulauf erstreckt. Damit gibt es in dieser Strömungsrichtung keine Strömungshindernisse oder strömungsberuhigte Bereiche.

Des Weiteren kann der Filterkorb beidseitig offen ausgebildet sein, insbesondere länglich und/oder zylindrisch. Damit ist er zum einen beim automatischen Reinigungsvorgang über die Ablassöffnung gut durchspülbar, und zum anderen kann er von beiden Seiten händisch gereinigt werden.

Optional besteht der Filterkorb aus insbesondere rostfreiem Edelstahl. Dies ist besonders lang haltbar. Es kommen aber auch Ausführungen aus Kunststoff in Betracht.

Gemäß einer möglichen Weiterbildung ist die Filtervorrichtung ein Pumpenvorfilter. Hier kann die Filtervorrichtung die Vorteile eines Schutzes der Förderpumpe ohne Leistungsverlust voll ausspielen und außerdem kann die Ablassfunktion dann auf einfache Weise in die Pumpensteuerung integriert werden.

In einer näheren Ausführungsform weist die Filtervorrichtung eine Messeinrichtung umfassend einen Drucksensor zur Messung eines Drucks innerhalb des Filtergehäuses und umfassend einen Prozessor mit einem Algorithmus, mit dem vom gemessenen Druck auf den Verschmutzungsgrad des Filterkorbs geschlossen wird, auf. Damit ist der optimale Zeitpunkt für eine Filterkorbreinigung bestimmbar, und die Reinigung optional auch hierauf basierend auslösbar, insbesondere automatisiert.

Außerdem betrifft die Erfindung eine Pumpenvorrichtung mit einer Förderpumpe, die zwischen einer Saugleitung und einer Druckleitung angeordnet ist, und mit einer Filtervorrichtung wie sie vorstehend beschrieben ist, wobei der Filterkorb der Filtervorrichtung in der Saugleitung angeordnet ist. Hierdurch wird die Filtervorrichtung zu einem Pumpenvorfilter und schützt die Förderpumpe vor Schmutzstoffen.

Dabei sollte der Filterzulauf der Filtervorrichtung strömungstechnisch weiter von der Förderpumpe entfernt angeordnet sein als der Filterablauf.

Bei einer bevorzugten Ausführungsform grenzt das Filtergehäuse unmittelbar an ein Pumpengehäuse der Förderpumpe an. Damit werden kurze Leitungswege zwischen Filterkorb und Förderpumpe erzielt und alle Komponenten lassen sich einfach ausrichten und aufstellen.

Im Speziellen kann die Förderpumpe ein Pumpengehäuse aufweisen, in dem ein Laufrad angeordnet ist. Rotierende Laufräder eignen sich insbesondere für hohe Fördervolumen. Außerdem sollte die Förderpumpe einen Antriebsmotor aufweisen, mit dem das Laufrad angetrieben ist.

Optional kann die Pumpenvorrichtung einen Trockenlaufschutz aufweisen, der die Förderpumpe automatisch deaktiviert, wenn zu wenig flüssiges Fluid in der Förderpumpe vorhanden ist. Damit ist die Förderpumpe vor Trockenlaufschäden geschützt, was insbesondere in Kombination mit der optionalen Einblaseinrichtung wichtig ist.

In einer speziellen Ausführung ist im Filterablauf oder einer hieran angeschlossenen Ableitung der Filtervorrichtung eine Ablauf-Absperreinheit angeordnet, wobei die Förderpumpe strömungstechnisch zwischen dem Filterkorb und der Ablauf-Absperreinheit angeordnet ist.

Gemäß einer speziellen Ausgestaltung der Pumpenvorrichtung ist die Förderpumpe zu deren Aktivierung mit einer Steuereinheit elektrisch angesteuert, ist die Ablass-Absperreinheit zu deren Betätigung mit der Steuereinheit elektrisch angesteuert, ist die Ablauf-Absperreinheit zu deren Betätigung mit der Steuereinheit elektrisch angesteuert, ist im Filterzulauf oder einer hieran angeschlossenen Zuleitung eine Zulauf-Absperreinheit angeordnet, wobei die Zulauf-Absperreinheit zu deren Betätigung mit der Steuereinheit elektrisch angesteuert ist, und mündet eine Einblaseinrichtung über eine Einblasöffnung in das Filtergehäuse ein, mit der durch Einblasen eines Einblasfluids ein Fluid aus dem Filtergehäuse in den Filterzulauf und/oder den Filterablauf und/oder die Ablassleitung drückbar ist, wobei die Einblaseinrichtung zum Einblasen mit der Steuereinheit elektrisch angesteuert ist. Mit der zentralen Steuereinheit können damit zentral zahlreiche der Komponenten koordiniert angesteuert werden, wodurch zuverlässig eine automatisierte Filterreinigung erreicht wird.

Dies kann dadurch umgesetzt sein, dass ein Filterreinigungsalgorithmus der Steuereinheit derart ausgestaltet ist, dass zur Durchführung einer Filterreinigung die Steuereinheit
zuerst eine Betriebsunterbrechung dadurch vornimmt, dass sie
   a. die Förderpumpe deaktiviert;
   b. die Ablauf-Absperreinheit schließt; und
   c. die Zulauf-Absperreinheit schließt;
danach eine Schmutzablassung erfolgt, indem die Steuereinheit
   d. die Ablass-Absperreinheit öffnet;
   e. die Einblaseinrichtung zum Einblasen aktiviert und/oder die Ablauf-Absperreinheit öffnet und/oder die Zulauf-Absperreinheit öffnet;
      danach
   f. die Ablass-Absperreinheit schließt;
danach eine Wiederinbetriebnahme erfolgt, indem die Steuereinheit
   g. die Ablauf-Absperreinheit öffnet;
   h. die Zulauf-Absperreinheit öffnet; und
   i. die Förderpumpe wieder aktiviert.

Auf diese Weise ist die Pumpenvorrichtung für automatische Filterreinigungen vorbereitet. Innerhalb der zeitlich definierten Fenster können die Schritte auch in abweichender Reihenfolge zur vorstehenden Formulierungsreihenfolge erfolgen.

Optional kann der Filterreinigungsalgorithmus der Steuereinheit derart ausgestaltet sein, dass bei der Schmutzablassung das Fluid, das aus dem Innenraum über die Ablass-Absperreinheit abgelassen wird, anteilig von dem Filterzulauf durch den Innenraum des Filterkorbs strömt, ohne die Durchtrittslöcher zu passieren, und anteilig von dem Filterablauf durch die Durchtrittslöcher in den Innenraum und von dort zu der Ablassleitung strömt, und anteilig von der Einblaseinrichtung in das Filtergehäuse eingeblasenes Einblasfluid ist. Hierdurch können die Schmutzpartikel durch unterschiedliche Strömungen gelöst und abtransportiert werden.

Des Weiteren ist optional möglich, dass der Filterreinigungsalgorithmus der Steuereinheit derart ausgestaltet ist, dass die Steuereinheit bei der Betriebsunterbrechung die Einblaseinrichtung zum Einblasen aktiviert und die Ablauf-Absperreinheit und/oder die Zulauf-Absperreinheit derart zumindest teilweise öffnet, dass Fluid durch das Einblasen von Einblasfluid aus dem Filtergehäuse in den Filterzulauf und/oder den Filterablauf gedrückt wird. Damit wird erreicht, dass später weniger vom Fluid durch die Ablassleitung entweicht, sondern der Anteil des Einblasfluids an der Reinigung größer ist.

Alternativ kann die Pumpenvorrichtung so ausgestaltet sein, dass die Förderpumpe zu deren Aktivierung mit einer Steuereinheit elektrisch angesteuert ist, die Ablass-Absperreinheit zu deren Betätigung mit der Steuereinheit elektrisch angesteuert ist, die Ablauf-Absperreinheit zu deren Betätigung mit der Steuereinheit elektrisch angesteuert ist, im Filterzulauf oder einer hieran angeschlossenen Zuleitung eine Zulauf-Absperreinheit angeordnet ist, wobei die Zulauf-Absperreinheit zu deren Betätigung mit der Steuereinheit elektrisch angesteuert ist, wobei ein Filterreinigungsalgorithmus der Steuereinheit derart ausgestaltet ist, dass zur Durchführung einer Filterreinigung die Steuereinheit
zuerst eine Betriebsunterbrechung dadurch vornimmt, dass sie
   a. die Förderpumpe deaktiviert;
   b. die Ablauf-Absperreinheit und/oder die Zulauf-Absperreinheit schließt;
danach eine Schmutzablassung erfolgt, indem die Steuereinheit
   c. die Ablass-Absperreinheit einerseits und die Ablauf-Absperreinheit und/oder die Zulauf-Absperreinheit öffnet oder geöffnet lässt, um Fluid aus dem Filterzulauf bzw. Filterablauf zur Ablassöffnung des Filtergehäuses strömen zulassen.

Hierdurch ist keine ergänzende Technik für das Einblasen eines Fremdfluids erforderlich und die Ausgestaltung technisch wenig komplex. Bei Anwendungen, bei denen der Verlust von Fluid für Spülvorgang eher unkritisch ist, kann also mit dem Fluid selbst gespült werden.

Gemäß einer einfachen optionalen Umsetzung erfolgt die Strömung hin zur Ablassöffnung (insbesondere des Fluids) durch ein geodätisches Gefälle zwischen dem Filterzulauf bzw. Filterablauf einerseits und der Ablassleitung andererseits.

Bei einer anderen optionalen Umsetzung ist die Strömung hin zur Ablassöffnung (insbesondere des Fluids) durch eine Spülpumpe bewirkt. Damit wird ein hoher Spülvolumenstrom erzeugt, dies insbesondere auch wenn kein geodätisches Gefälle ausgebildet ist. Die Spülpumpe kann im Zulauf, Ablauf oder in einem Parallelstrang zu einem dieser angeordnet sein. Bei einer Anordnung in einem Parallelstrang muss die Spülpumpe im regulären Filterprozess nicht durchströmt werden, was die Effizienz steigert und Verschmutzung der Spülpumpe vermeidet.

Bei einer besonderen Ausführungsform weist die Filtervorrichtung eine Entlüftungseinrichtung auf, mit der Luft und/oder ein Einblasfluid aus dem Filtergehäuse ablassbar ist, wobei die Entlüftungseinrichtung zur Aktivierung der Entlüftung mit der Steuereinheit angesteuert ist, wobei der Filterreinigungsalgorithmus der Steuereinheit derart ausgestaltet ist, dass bei der Wiederinbetriebnahme zuerst die Entlüftungseinrichtung aktiviert wird, bis das Filtergehäuse zumindest im Wesentlichen mit Fluid gefüllt ist, bevor die Steuereinheit die Förderpumpe wieder aktiviert. Hierdurch wird die Förderpumpe vor einem Trockenlauf geschützt und es sind auch Förderpumpen einsetzbar, die keinen Trockenlauf vertragen.

Zur Automatisierung der Reinigung kann optional vorgesehen sein, dass die Filtervorrichtung eine Messeinrichtung umfassend einen Drucksensor zur Messung eines Drucks innerhalb des Filtergehäuses und umfassend einen Prozessor mit einem Algorithmus, mit dem vom gemessenen Druck auf den Verschmutzungsgrad des Filterkorbs geschlossen wird, aufweist, wobei die Steuereinheit dazu ausgestaltet ist, den Filterreinigungsalgorithmus bei Detektion eines definierten Verschmutzungsgrades zu starten. Damit wird bedarfsgerecht bei einer starken Verschmutzung eine Filterreinigung ausgelöst.

Alternativ oder ergänzend kann die Filtervorrichtung ein Zeitprogramm, insbesondere mit definierten Zeitpunkten oder Intervallen, aufweisen, wobei die Steuereinheit den Filterreinigungsalgorithmus entsprechend dem Zeitprogramm startet. Dies ist einfach umsetzbar, und kann in der optionalen Kombination mit der Messeinrichtung zusätzlich dazu beitragen, dass Reinigungen möglichst in bestimmten Zeiträumen erfolgen, bspw. außerhalb von Frequentierungsspitzen des Schwimmbetriebs eines Schwimmbades.

Sowohl die Reinigungszeitpunkte, als auch die genutzten Reinigungsströme werden von dem Filterreinigungsalgorithmus vorzugsweise laufend optimiert anhand der Erhebung von Daten wie den Reinigungszeitpunkten, den genutzten Reinigungsströmungen und dem Druck in dem Filterkorb vor und nach der Reinigung, etc. Damit erhält künstliche Intelligenz Einzug in die Filterreinigungsprozesse. Dabei muss die Optimierung nicht auf die Filtervorrichtung beschränkt sein, sondern kann auch durch Datenaustausch mit weiteren Filtervorrichtungen am gleichen Einsatzort und/oder an anderen Einsatzorten erfolgen.

Optional kann die Pumpenvorrichtung zusammen mit weiteren Pumpenvorrichtung datenkommunizierend mit einer zentralen Datenbank verbunden sein, und Betriebsparameter der Pumpenvorrichtung können basierend auf Datenanalysen der zentralen Datenbank kontinuierlich oder sukzessive angepasst sein.

Besonders günstig erscheint es, Daten zentral und Cloud-basiert zu erfassen, in der Gesamtheit auszuwerten und basierend auf der hohen Datenmenge den Filterreinigungsalgorithmus der einzelnen Filtervorrichtung weiter zu optimieren.

Es versteht sich, dass alle Vorrichtungsmerkmale auch innerhalb eines erfindungsgemäßen Verfahrens einsetzbar sind, und solche Verfahren Gegenstand der Offenbarung sind. Insbesondere die Ansteuerung von Komponenten können dabei als Verfahrensschritte ausgeführt werden.

Der Betrieb einer Filtervorrichtung wie sie vorstehend beschrieben ist, ist durch ein Verfahren möglich, bei dem zumindest einer der folgenden Schritte erfolgt:
- ein Fluid wird dadurch aus dem Innenraum über die Ablass-Absperreinheit abgelassen, dass
- man Fluid von dem Filterzulauf durch den Innenraum des Filterkorbs strömen lässt, ohne die Durchtrittslöcher zu passieren, und/oder
- man Fluid von dem Filterablauf durch die Durchtrittslöcher in den Innenraum und von dort zu der Ablassleitung strömen lässt, und/oder
- man ein sonstiges Fluid in das Filtergehäuse einleitet.

Die Vorteile entsprechen denjenigen, die vorne zu den entsprechenden Vorrichtungsmerkmalen beschrieben sind. Es versteht sich, dass der Fachmann dieses Verfahren sinnlogisch durch alle Vorrichtungsmerkmale gemäß den Ansprüchen und/oder der Beschreibung ergänzen kann, weil dies implizit mit offenbart ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Pumpenvorrichtung mit einer Filtervorrichtung mit Teilschnitt;
- Fig. 2: eine Seitenansicht der Pumpenvorrichtung mit Filtervorrichtung mit Teilschnitt gemäß Fig. 1;
- Fig. 3: eine perspektivische Ansicht der Pumpenvorrichtung mit Filtervorrichtung gemäß Fig. 1 ohne den Teilschnitt;
- Fig. 4a: einen Filterkorb in einer Seitenansicht; und
- Fig. 4b: einen Filterkorb in einer perspektivischen Ansicht von schräg unten.

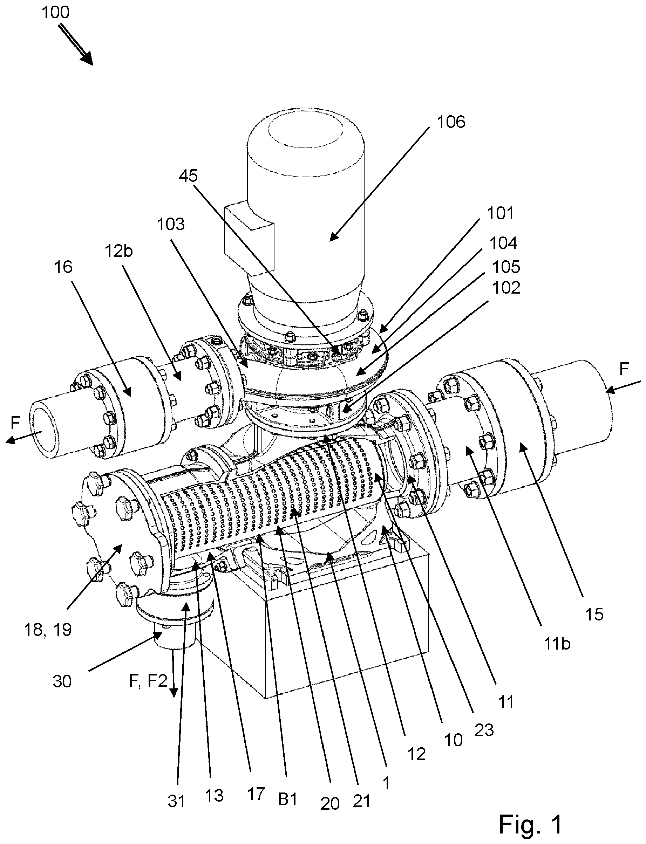

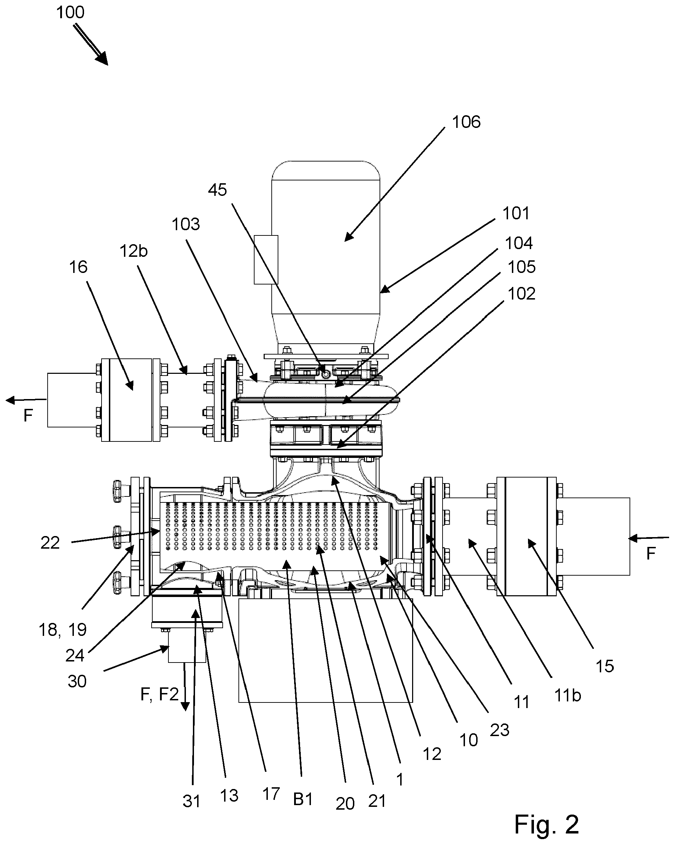

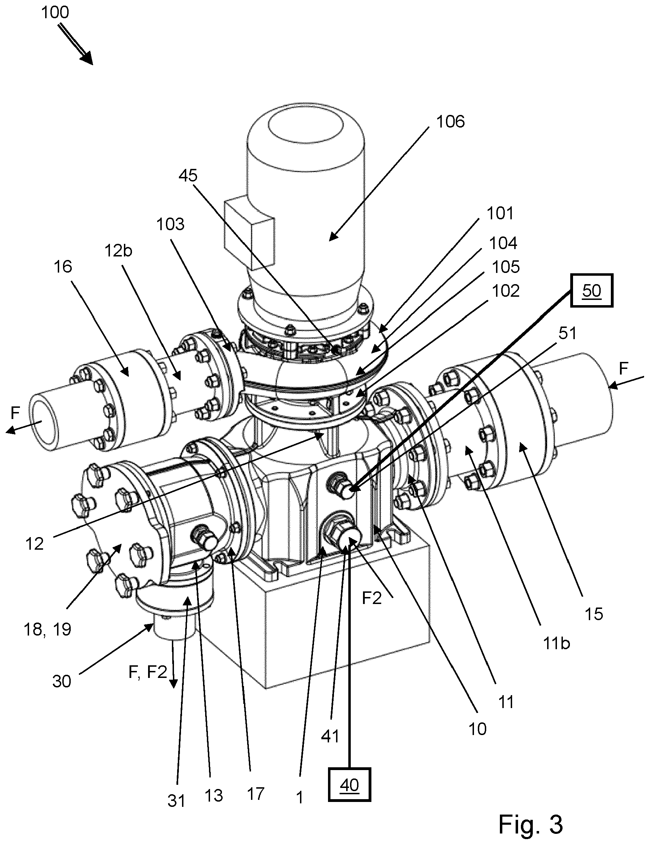

Fig. 1 zeigt eine perspektivische Ansicht einer Pumpenvorrichtung 100 mit einer Filtervorrichtung 1 mit einem Teilschnitt im Bereich der Filtervorrichtung 1. Diese Pumpenvorrichtung 100 ist auch in den Fig. 2 **und** 3 gezeigt, nämlich in Fig. 2 von der Seite und in Fig. 3 ohne den Teilschnitt. Die **Fig. 1****,** **2** **und** **3** werden daher gemeinsam beschrieben und gleiche Bezugsziffern kennzeichnen gleiche Bauteile.

Die Pumpenvorrichtung 100 verfügt über eine Förderpumpe 101, mit einem Pumpengehäuse 104, in dem ein Laufrad 105 (verdeckt im Inneren liegend) angeordnet ist, das mit einem Antriebsmotor 106 angetrieben ist. Das Pumpengehäuse 104 liegt strömungstechnisch zwischen einer Saugleitung 102 und einer Druckleitung 103 der Förderpumpe 101. Optional kann die Förderpumpe 101 einen Trockenlaufschutz aufweisen, der die Förderpumpe 101 automatisch deaktiviert, wenn zu wenig flüssiges Fluid F in der Förderpumpe 101 vorhanden ist, insbesondere im Pumpengehäuse 104.

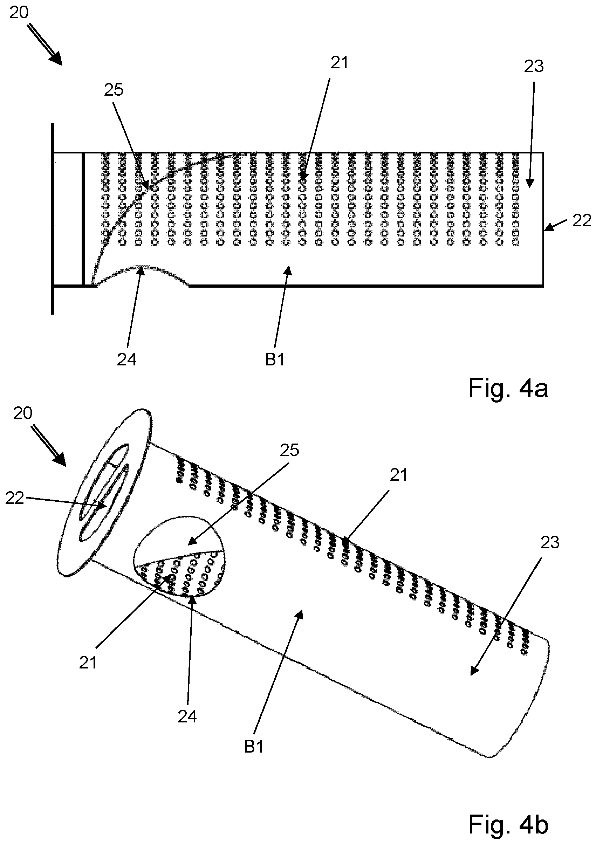

Die Filtervorrichtung 1 weist ein Filtergehäuse 10 auf, in dem ein geodätisch horizontal ausgerichteter Filterkorb 20 mit Durchtrittslöchern 21 angeordnet ist. Ein Filterzulauf 11 des Filtergehäuses 10 mündet in einen Innenraum 22 des Filterkorbs 20 ein und ein Filterablauf 12 des Filtergehäuses 10 führt von einer Außenseite 23 des Filterkorbs 20 weg. Der Filterkorb 20 ist in möglichen Ausgestaltungen nochmal als Einzelteil in den Fig. 4a und 4b gezeigt. Im Filterzulauf 11 bzw. der hieran angeschlossenen Zuleitung 11b ist eine elektrisch angesteuerte Zulauf-Absperreinheit 15 angeordnet. Außerdem ist im Filterablauf 12 bzw. einer hieran angeschlossenen Ableitung 12b eine elektrisch angesteuerte Ablauf-Absperreinheit 16 angeordnet.

Der Filterkorb 20 ist beidseitig offen ausgebildet, insbesondere länglich und zylindrisch, besteht aus rostfreiem Edelstahl, und verfügt über eine geodätisch nach unten ausgerichtete Ablassöffnung 24, die in eine fluchtend und benachbart angeordnete Ablassöffnung 13 des Filtergehäuses 10 mündet. Dabei ist der Innenraum 22 des Filterkorbs 20 über diese Ablassöffnungen 13, 24 mit einer Ablassleitung 30 strömungsverbunden. Die Ablassöffnung 13, der Filterzulauf 11 und der Filterablauf 12 sind jeweils durch eine separate Öffnung im Filtergehäuse 10 ausgebildet. Der Filterzulauf 11 und die Ablassöffnungen 13, 14 sind an gegenüberliegenden Endbereichen des Filterkorbs 20 angeordnet. In einem geodätisch unten angeordneten Bereich B1 weist der Filterkorb 20 keine Durchtrittslöcher 21 auf. Letztere liegen im darüber angeordneten Bereich des Filterkorbs 20.

Das Filtergehäuse 10 ist teilweise durch ein Vorsatzgehäuse 17 ausgebildet, wobei die Ablassöffnung 13 des Filtergehäuses 10 im Vorsatzgehäuse 17 ausgebildet ist. Das Vorsatzgehäuse 17 ist derart in mehreren Winkelpositionen festlegbar, dass die Ablassöffnung 13 nicht unbedingt wie gezeigt geodätisch nach unten weisen muss, sondern durch Ummontieren auch zur Seite weisend ausgerichtet sein kann.

Weiterhin weist das Filtergehäuse 10 einen Filterdeckel 19 auf, durch den der Filterkorb 20 entnehmbar ist. Dieser ist vorliegend insbesondere am Vorsatzgehäuse 17 angeordnet. Der Filterdeckel 19 bildet gleichzeitig ein Schauglas 18 aus, durch das ein Blick in den Innenraum 22 des Filterkorbs 20 möglich ist. Der Filterzulauf 11 mündet auf einer Seite des Filterkorbs 20 in dessen Innenraum 22, die dem Filterdeckel 19 bzw. dem Schauglas 18 gegenüberliegt. Dabei erstreckt sich der Filterkorb 20 röhrenförmig zwischen dem Filterdeckel 19 bzw. dem Schauglas 18 und dem Filterzulauf 11.

Der Filterkorb 20 der Filtervorrichtung 1 ist in der Saugleitung 102 der Förderpumpe 101 angeordnet, wodurch die Filtervorrichtung 1 einen Pumpenvorfilter bezogen auf die Förderpumpe 101 ausbildet. Der Filterzulauf 11 der Filtervorrichtung 1 ist strömungstechnisch weiter von der Förderpumpe 101 entfernt angeordnet als der Filterablauf 12. Erkennbar grenzt das Filtergehäuse 10 unmittelbar an das Pumpengehäuse 104 der Förderpumpe 101 an. Theoretisch möglich, aber nicht so dargestellt, ist es, Gehäuseteile zu nutzen, die gleichsam Teil des Filtergehäuses 10 und Teil des Pumpengehäuses 104 sind.

Die Ablassleitung 30 schließt sich geodätisch unten an die Ablassöffnung 13 des Filtergehäuses 10 an. In der Ablassleitung 30 ist eine elektrisch angesteuerte Ablass-Absperreinheit 31 angeordnet, sodass durch Betätigung der Ablass-Absperreinheit 31 ein Fluid F, F2 aus dem Innenraum 22 des Filterkorbs 20 über die Ablassleitung 30 ablassbar ist.

Mittels der in Fig. 3 schematisch ergänzten Einblaseinrichtung 40, bspw. ein Kompressor mit Anschlussleitung, und eine in das Filtergehäuse 10 einmündende Einblasöffnung 41 kann durch Einblasen eines Einblasfluids F2 ein Fluid F aus dem Filtergehäuse 10 in den Filterzulauf 11 und/oder den Filterablauf 12 und/oder die Ablassleitung 30 gedrückt werden, je nachdem welche der Absperrvorrichtung 15, 16, 31 gesperrt oder geöffnet sind. Die Einblasöffnung 41 ist im Ausführungsbeispiel strömungstechnisch zwischen den Durchtrittslöchern 21 des Filterkorbs 20 und dem Filterablauf 12 angeordnet.

Fluid F, F2, das aus dem Innenraum 22 über die Ablass-Absperreinheit 31 abgelassen wird, kann insbesondere von dem Filterzulauf 11 durch den Innenraum 22 des Filterkorbs 20 strömen, ohne die Durchtrittslöcher 21 zu passieren, und/oder von dem Filterablauf 12 durch die Durchtrittslöcher 21 in den Innenraum 22 und von dort zu der Ablassleitung 30 strömen, und/oder das in das Filtergehäuse 10 eingeleitete sonstige Fluid bzw. Einblasfluid F2 sein.

Weiterhin kann die Einblaseinrichtung 40 derart angesteuert werden, dass Fluid F durch Einblasen des Einblasfluids F2 zunächst aus dem Filtergehäuse 10 in den Filterzulauf 11 und/oder den Filterablauf 12 gedrückt wird, vorzugsweise in den Filterzulauf 11, bevor die Ablass-Absperreinheit 31 geöffnet wird.

Außerdem verfügt die Filtervorrichtung 1 über eine Entlüftungseinrichtung 45 im Filterablauf 12, die vorliegend am Pumpengehäuse 104 angeordnet ist, und mit der Luft und/oder ein Einblasfluid F2 aus dem Filtergehäuse 10 und dem Filterablauf 12 inklusive dem Pumpengehäuse 104 ablassbar ist.

Wie man in den **Fig. 4a und 4b** erkennt, kann optional ein Leitelement 25 im Filterkorb 20 angeordnet sein, das Fluid F, F2 und/oder Schmutzstoffe in Richtung der Ablassöffnung 24 lenkt.

Gemäß Fig. 3 verfügt die Filtervorrichtung 1 zudem über eine Messeinrichtung 50 umfassend einen Drucksensor 51 zur Messung eines Drucks innerhalb des Filtergehäuses 10 und umfassend einen Prozessor mit einem Algorithmus, mit dem vom gemessenen Druck auf den Verschmutzungsgrad des Filterkorbs 20 geschlossen wird. Hierzu kann beispielsweise strömungstechnisch zwischen den Durchtrittslöchern 21 und dem Laufrad 105 der von der Förderpumpe 101 verursachte Unterdruck bestimmt werden. Auch der im Innenraum 22 des Filterkorbs 10 anliegende Unterdruck kann ein Indikator für den Verschmutzungsgrad sein. Besonders geeignet ist eine Differenzdruckmessung zwischen dem Innenraum 22 und der Außenseite 23 des Filterkorbs 20.

Die Pumpenvorrichtung 100 kann nunmehr dazu ausgestaltet sein, dass ein Filterreinigungsalgorithmus einer Steuereinheit derart ausgestaltet ist, dass zur Durchführung einer Filterreinigung die Steuereinheit
zuerst eine Betriebsunterbrechung dadurch vornimmt, dass sie
   a. die Förderpumpe 101 bzw. den Antriebsmotor 106 deaktiviert;
   b. die Ablauf-Absperreinheit 16 schließt; und
   c. die Zulauf-Absperreinheit 15 schließt;
danach eine Schmutzablassung erfolgt, indem die Steuereinheit
   d. die Ablass-Absperreinheit 31 öffnet;
   e. die Einblaseinrichtung 40 zum Einblasen aktiviert und/oder die Ablauf-Absperreinheit 16 öffnet und/oder die Zulauf-Absperreinheit 15 öffnet;
      danach
   f. die Ablass-Absperreinheit 31 schließt;
danach eine Wiederinbetriebnahme erfolgt, indem die Steuereinheit
   g. die Ablauf-Absperreinheit 16 öffnet;
   h. die Zulauf-Absperreinheit 15 öffnet; und
   i. die Förderpumpe 101 wieder aktiviert.

Bei der Betriebsunterbrechung erfolgt vorzugsweise zuerst das Schließen der Ablauf-Absperreinheit 16, dann die Deaktivierung der Förderpumpe 101 bzw. des Antriebsmotors 106, und erst dann das Schließen der Zulauf-Absperreinheit 15.

Bei der eine Wiederinbetriebnahme erfolgt vorzugsweise zunächst das Öffnen der Zulauf-Absperreinheit 15, dann das Aktivieren der Förderpumpe 101 bzw. des Antriebsmotors 106, und erst dann das Öffnen der Ablauf-Absperreinheit 16.

Bei der Schmutzablassung kann das Fluid F, F2, das aus dem Innenraum 22 über die Ablass-Absperreinheit 31 abgelassen wird, anteilig von dem Filterzulauf 11 durch den Innenraum 22 des Filterkorbs 20 strömen, ohne die Durchtrittslöcher 21 zu passieren, und anteilig von dem Filterablauf 12 durch die Durchtrittslöcher 21 in den Innenraum 22 und von dort zu der Ablassleitung 30 strömen, und anteilig von der Einblaseinrichtung 40 in das Filtergehäuse 10 eingeblasenes Einblasfluid F2 sein.

Weiterhin kann die Steuereinheit bei der Betriebsunterbrechung die Einblaseinrichtung 40 zum Einblasen aktivieren und gleichzeitig die Ablauf-Absperreinheit 16 und/oder die Zulauf-Absperreinheit 15, vorzugsweise nur die Zulauf-Absperreinheit 15, derart zumindest teilweise öffnen, dass Fluid F durch das Einblasen von Einblasfluid F2 aus dem Filtergehäuse 10 in den Filterzulauf 11 und/oder den Filterablauf 12 gedrückt wird.

Bei der Wiederinbetriebnahme sollte zuerst die Entlüftungseinrichtung 45 aktiviert werden, bis das Filtergehäuse 10 zumindest im Wesentlichen mit Fluid F gefüllt ist, bevor die Steuereinheit die Förderpumpe 101 wieder aktiviert. Hierbei wird bevorzugt die Zulauf-Absperreinheit 15 geöffnet, um das Filtergehäuse 10 beim Entlüften aus Richtung des Filterzulaufs 11 zu Befüllen. Die Ablauf-Absperreinheit 16 bleibt solange gesperrt und die Förderpumpe 101 bzw. der Antriebsmotor 106 deaktiviert.

Mittels der Messeinrichtung 50 und einem Prozessor mit einem Algorithmus, mit dem vom gemessenenK Druck auf den Verschmutzungsgrad des Filterkorbs 20 geschlossen wird, kann die Steuereinheit den Filterreinigungsalgorithmus bei Detektion eines definierten Verschmutzungsgrades starten.

Die Erfindung ist nicht auf eine der vorbeschriebenen Ausführungsformen beschränkt, sondern in vielfältiger Weise abwandelbar.

Statt eines Einblasens von Einblasfluid F2 ist auch ein einfaches Rückspülen mit dem fluid F als solchem möglich, dies insbesondere sowohl vom Filterzulauf 11 als auch vom Filterablauf 12 her.

### Bezugszeichenliste

| | | | |
|---|---|---|---|
| 1 | Filtervorrichtung | 31 | Ablass-Absperreinheit |
| 10 | Filtergehäuse | 40 | Einblaseinrichtung |
| 11 | Filterzulauf | 41 | Einblasöffnung |
| 11b | Zuleitung | | |
| 12 | Filterablauf | 45 | Entlüftungseinrichtung |
| 12b | Ableitung | | |
| 13 | Ablassöffnung (Filtergehäuse) | 50 | Messeinrichtung |
| 15 | Zulauf-Absperreinheit | 51 | Drucksensor |
| 16 | Ablauf-Absperreinheit | | |
| 17 | Vorsatzgehäuse | 100 | Pumpenvorrichtung |
| 18 | Schauglas | 101 | Förderpumpe |
| 19 | Filterdeckel | 102 | Saugleitung |
| | | 103 | Druckleitung |
| 20 | Filterkorb | 104 | Pumpengehäuse |
| 21 | Durchtrittslöcher | 105 | Laufrad |
| 22 | Innenraum | 106 | Antriebsmotor |
| 23 | Außenseite | | |
| 24 | Ablassöffnung (Filterkorb) | B1 | geodätisch unten angeordneter Bereich (Filterkorb) |
| 25 | Leitelement | | |
| | | F | Fluid |
| 30 | Ablassleitung | F2 | Einblasfluid |

## Patentansprüche

1. **Filtervorrichtung** (1) mit einem Filtergehäuse (10), in dem ein Filterkorb (20) mit Durchtrittslöchern (21) angeordnet ist,
- wobei ein Filterzulauf (11) des Filtergehäuses (10) in einen Innenraum (22) des Filterkorbs (20) einmündet und ein Filterablauf (12) des Filtergehäuses (10) von einer Außenseite (23) des Filterkorbs (20) wegführt,
wobei der Filterkorb (20) eine Ablassöffnung (24) aufweist, die in eine Ablassöffnung (13) des Filtergehäuses (10) mündet,
wobei der Innenraum (22) des Filterkorbs (20) über diese Ablassöffnungen (13, 24) mit einer Ablassleitung (30) strömungsverbunden ist,
wobei in der Ablassleitung (30) eine Ablass-Absperreinheit (31) angeordnet ist, sodass durch Betätigung der Ablass-Absperreinheit (31) ein Fluid (F) aus dem Innenraum (22) des Filterkorbs (20) über die Ablassleitung (30) ablassbar ist,
**dadurch gekennzeichnet, dass**
- der Filterkorb (20) geodätisch horizontal ausgerichtet ist und in einem geodätisch unten angeordneten Bereich (B1) keine Durchtrittslöcher (21) aufweist; und/oder
- die Ablassöffnung (24) des Filterkorbs (20) ein Loch in einer umfangsseitigen Wandung des Filterkorbs (20) ist.

2. Filtervorrichtung (1) gemäß Anspruch 1, **dadurch gekennzeichnet, dass** der Filterzulauf (11) und die Ablassöffnungen (13, 14) an gegenüberliegenden Endbereichen des Filterkorbs (20) angeordnet sind.

3. Filtervorrichtung (1) gemäß einem der vorhergehenden Ansprüche, **dadurch gekennzeichnet, dass** die Ablassöffnung (24) des Filterkorbs (20) in dem geodätisch unten angeordneten Bereich (B1) des Filterkorbs (20) ausgebildet ist.

4. Filtervorrichtung (1) gemäß einem der vorhergehenden Ansprüche, **dadurch gekennzeichnet, dass** die Ablassöffnungen (13, 24) geodätisch nach unten ausgerichtet sind.

5. Filtervorrichtung (1) gemäß einem der vorhergehenden Ansprüche, **dadurch gekennzeichnet, dass** ein Leitelement (25) im Filterkorb (20) angeordnet ist, das Fluid (F) und/oder Schmutzstoffe in Richtung der Ablassöffnung (24) lenkt.

6. Filtervorrichtung (1) gemäß einem der vorhergehenden Ansprüche, **dadurch gekennzeichnet, dass** im Filterzulauf (11) oder einer hieran angeschlossenen Zuleitung (11b) eine Zulauf-Absperreinheit (15) angeordnet ist.

7. Filtervorrichtung (1) gemäß einem der vorhergehenden Ansprüche, **dadurch gekennzeichnet, dass** im Filterablauf (12) oder einer hieran angeschlossenen Ableitung (12b) eine Ablauf-Absperreinheit (16) angeordnet ist.

8. Filtervorrichtung (1) gemäß einem der vorhergehenden Ansprüche, **dadurch gekennzeichnet, dass** das Fluid (F), das aus dem Innenraum (22) über die Ablass-Absperreinheit (31) abgelassen wird,
- von dem Filterzulauf (11) durch den Innenraum (22) des Filterkorbs (20) strömt, ohne die Durchtrittslöcher (21) zu passieren, und/oder
- von dem Filterablauf (12) durch die Durchtrittslöcher (21) in den Innenraum (22) und von dort zu der Ablassleitung (30) strömt, und/oder
- ein in das Filtergehäuse (10) eingeleitetes sonstiges Fluid (F, F2) ist.

9. Filtervorrichtung (1) gemäß einem der vorhergehenden Ansprüche, **dadurch gekennzeichnet, dass** eine Einblaseinrichtung (40) über eine Einblasöffnung (41) in das Filtergehäuse (10) einmündet, mit der durch Einblasen eines Einblasfluids (F2) ein Fluid (F) aus dem Filtergehäuse (10) in den Filterzulauf (11) und/oder den Filterablauf (12) und/oder die Ablassleitung (30) drückbar ist.

10. Filtervorrichtung (1) gemäß einem der vorhergehenden Ansprüche, **dadurch gekennzeichnet, dass** diese eine Entlüftungseinrichtung (45) aufweist, mit der Luft und/oder ein Einblasfluid (F2) aus dem Filtergehäuse (10) ablassbar ist.

11. Filtervorrichtung (1) gemäß einem der vorhergehenden Ansprüche, **dadurch gekennzeichnet, dass** das Filtergehäuse (10) teilweise durch ein Vorsatzgehäuse (17) ausgebildet ist, wobei die Ablassöffnung (13) des Filtergehäuses (10) im Vorsatzgehäuse (17) ausgebildet ist.

12. Filtervorrichtung (1) gemäß einem der vorhergehenden Ansprüche, **dadurch gekennzeichnet, dass** das Filtergehäuse (10) einen Filterdeckel (19) aufweist, durch den der Filterkorb (20) entnehmbar ist.

13. Filtervorrichtung (1) gemäß Anspruch 12, **dadurch gekennzeichnet, dass** der Filterzulauf (11) auf einer Seite des Filterkorbs (20) in dessen Innenraum (22) mündet, die dem Filterdeckel (18) gegenüberliegt.

14. Filtervorrichtung (1) gemäß einem der Ansprüche 12 oder 13, **dadurch gekennzeichnet, dass** sich der Filterkorb (20) röhrenförmig zwischen dem Filterdeckel (19) und dem Filterzulauf (11) erstreckt.

15. Filtervorrichtung (1) gemäß einem der vorhergehenden Ansprüche, **dadurch gekennzeichnet, dass** der Filterkorb (20) beidseitig offen ausgebildet ist, insbesondere länglich und/oder zylindrisch.

16. **Pumpenvorrichtung** (100) mit einer Förderpumpe (101), die zwischen einer Saugleitung (102) und einer Druckleitung (103) angeordnet ist, und mit einer Filtervorrichtung (1) gemäß einem der vorergehenden Ansprüche, wobei der Filterkorb (20) der Filtervorrichtung (1) in der Saugleitung (102) angeordnet ist.

## Claims

1. **Filter device** (1) having a filter housing (10) in which is disposed a filter basket (20) having passage holes (21),
- wherein a filter inlet (11) of the filter housing (10) opens into an interior (22) of the filter basket (20), and a filter outlet (12) of the filter housing (10) leads away from an outside (23) of the filter basket (20),
wherein the filter basket (20) has a discharge opening (24) which opens into a discharge opening (13) of the filter housing (10),
wherein the interior (22) of the filter basket (20), by way of these discharge openings (13, 24), is fluidically connected to a discharge line (30),
wherein a discharge shut-off unit (31) is disposed in the discharge line (30) in such a way that a fluid (F) is able to be discharged from the interior (22) of the filter basket (20) by way of the discharge line (30) by activating the discharge shut-off unit (31),
**characterized in that**
- the filter basket (20) is aligned so as to be geodetically horizontal and in a region (B1), disposed geodetically at the bottom, does not have any passage holes (21); and/or
- the discharge opening (24) of the filter basket (20) is a hole in a circumferential wall of the filter basket (20).

2. Filter device (1) according to Claim 1, **characterized in that** the filter inlet (11) and the discharge openings (13, 14) are disposed on mutually opposite end regions of the filter basket (20).

3. Filter device (1) according to one of the preceding claims, **characterized in that** the discharge opening (24) of the filter basket (20) is formed in the region (B1), disposed geodetically at the bottom, of the filter basket (20).

4. Filter device (1) according to one of the preceding claims, **characterized in that** the discharge openings (13, 24) are aligned so as to be geodetically downward.

5. Filter device (1) according to one of the preceding claims, **characterized in that** a directing element (25) which steers fluid (F) and/or contaminants in the direction of the discharge opening (24) is disposed in the filter basket (20).

6. Filter device (1) according to one of the preceding claims, **characterized in that** an inlet shut-off unit (15) is disposed in the filter inlet (11) or an inlet line (11b) connected thereto.

7. Filter device (1) according to one of the preceding claims, **characterized in that** an outlet shut-off unit (16) is disposed in the filter outlet (12) or an outlet line (12b) connected thereto.

8. Filter device (1) according to one of the preceding claims, **characterized in that** the fluid (F), which is discharged from the interior (22) by way of the discharge shut-off unit (31),
- flows from the filter inlet (11) through the interior (22) of the filter basket (20) without passing through the passage holes (21), and/or
- flows from the filter outlet (12) through the passage holes (21) into the interior (22) and from there to the discharge line (30), and/or
- is any other fluid (F, F2) which has been directed into the filter housing (10).

9. Filter device (1) according to one of the preceding claims, **characterized in that** an injection apparatus (40) opens into the filter housing (10) by way of an injection opening (41), a fluid (F) being able to be forced from the filter housing (10) into the filter inlet (11) and/or the filter outlet (12) and/or the discharge line (30) by injecting an injection fluid (F2) by way of said injection opening (41).

10. Filter device (1) according to one of the preceding claims, **characterized in that** said filter device (1) has a ventilating apparatus (45) by which air and/or an injection fluid (F2) are/is able to be discharged from the filter housing (10).

11. Filter device (1) according to one of the preceding claims, **characterized in that** the filter housing (10) is partially formed by an attachment housing (17), wherein the discharge opening (13) of the filter housing (10) is formed in the attachment housing (17).

12. Filter device (1) according to one of the preceding claims, **characterized in that** the filter housing (10) has a filter cover (19) through which the filter basket (20) is retrievable.

13. Filter device (1) according to Claim 12, **characterized in that** the filter inlet (11) opens into the interior (22) of the filter basket (20) on a side of the latter that lies opposite the filter cover (18).

14. Filter device (1) according to one of Claims 12 or 13, **characterized in that** the filter basket (20) extends in a tubular manner between the filter cover (19) and the filter inlet (11).

15. Filter device (1) according to one of the preceding claims, **characterized in that** the filter basket (20) is configured to be open on both sides, in particular so as to be elongate and/or cylindrical.

16. **Pump device** (100) having a conveying pump (101) which is disposed between a suction line (102) and a pressure line (103), and having a filter device (1) according to one of the preceding claims, wherein the filter basket (20) of the filter device (1) is disposed in the suction line (102).

## Revendications

1. Dispositif de filtration (1) comprenant un boîtier de filtre (10) dans lequel est placé un panier de filtre (20) ayant des trous traversants (21),
- une entrée de filtre (11) du boîtier de filtre (10) débouchant dans un espace intérieur (22) du panier de filtre (20) et une sortie de filtre (12) du boîtier de filtre (10) s'éloignant d'un côté extérieur (23) du panier de filtre (20),
le panier de filtration (20) présentant une ouverture d'évacuation (24) qui débouche dans une ouverture d'évacuation (13) du boîtier de filtre (10),
l'espace intérieur (22) du panier de filtre (20) étant relié fluidiquement par ces ouvertures d'évacuation (13, 24) à une conduite d'évacuation (30),
une unité (31) d'arrêt d'évacuation étant agencée dans la conduite d'évacuation (30), de sorte qu'en actionnant l'unité (31) d'arrêt d'évacuation, un fluide (F) est apte à être évacué de l'espace intérieur (22) du panier de filtre (20) par la conduite d'évacuation (30),
**caractérisé en ce que**
- le panier de filtration (20) est orienté géodésiquement à l'horizontale et ne présente pas de trous traversants (21) dans une zone (B1) agencée géodésiquement en bas ; et/ou
- l'ouverture d'évacuation (24) du panier de filtre (20) est un trou dans une paroi périphérique du panier de filtre (20).

2. Dispositif de filtration (1) selon la revendication 1, **caractérisé en ce que** l'entrée de filtre (11) et les ouvertures d'évacuation (13, 14) sont agencées dans des zones d'extrémité opposées du panier de filtre (20).

3. Dispositif de filtration (1) selon l'une des revendications précédentes, **caractérisé en ce que** l'ouverture d'évacuation (24) du panier de filtration (20) est formée dans la zone (B1) du panier de filtration (20) agencée géodésiquement en bas.

4. Dispositif de filtration (1) selon l'une des revendications précédentes, **caractérisé en ce que** les ouvertures d'évacuation (13, 24) sont orientées géodésiquement vers le bas.

5. Dispositif de filtration (1) selon l'une des revendications précédentes, **caractérisé en ce qu'**un élément de guidage (25) est agencé dans le panier de filtration (20), qui dirige le fluide (F) et/ou les impuretés en direction de l'ouverture d'évacuation (24).

6. Dispositif de filtration (1) selon l'une des revendications précédentes, **caractérisé en ce qu'**une unité d'arrêt d'alimentation (15) est agencée dans l'entrée de filtre (11) ou dans une conduite d'alimentation (11b) qui y est raccordée.

7. Dispositif de filtration (1) selon l'une des revendications précédentes, **caractérisé en ce qu'**une unité d'arrêt d'évacuation (16) est agencée dans la sortie de filtre (12) ou dans une conduite d'évacuation (12b) qui y est raccordée.

8. Dispositif de filtration (1) selon l'une des revendications précédentes, **caractérisé en ce que** le fluide (F) qui est évacué de l'espace intérieur (22) par l'unité (31) d'arrêt d'évacuation
- s'écoule depuis l'entrée du filtre (11) à travers l'espace intérieur (22) du panier de filtre (20) sans passer par les trous traversants (21), et/ou
- s'écoule de la sortie de filtre (12) à travers les trous traversants (21) dans l'espace intérieur (22) et de là vers la conduite d'évacuation (30), et/ou
- est un autre fluide (F, F2) introduit dans le boîtier de filtre (10).

9. Dispositif de filtration (1) selon l'une des revendications précédentes, **caractérisé en ce qu'**un dispositif d'injection (40) débouche dans le boîtier de filtre (10) par une ouverture d'injection (41) permettant, par injection d'un fluide d'injection (F2), de pousser un fluide (F) hors du boîtier de filtre (10) dans l'entrée de filtre (11) et/ou la sortie de filtre (12) et/ou la conduite d'évacuation (30).

10. Dispositif de filtration (1) selon l'une des revendications précédentes, **caractérisé en ce qu'**il comporte un dispositif de purge (45) permettant d'évacuer de l'air et/ou un fluide d'injection (F2) hors du boîtier de filtre (10).

11. Dispositif de filtration (1) selon l'une des revendications précédentes, **caractérisé en ce que** le boîtier de filtration (10) est formé en partie par un boîtier rapporté (17), l'ouverture d'évacuation (13) du boîtier de filtration (10) étant formée dans le boîtier rapporté (17).

12. Dispositif de filtration (1) selon l'une des revendications précédentes, **caractérisé en ce que** le boîtier de filtre (10) présente un couvercle de filtre (19) à travers lequel le panier de filtre (20) est apte à être retiré.

13. Dispositif de filtration (1) selon la revendication 12, **caractérisé en ce que** l'entrée de filtre (11) débouche dans l'espace intérieur (22) du panier de filtration (20) sur une face de celui-ci opposée au couvercle de filtration (18).

14. Dispositif de filtration (1) selon l'une des revendications 12 ou 13, **caractérisé en ce que** le panier de filtration (20) s'étend sous une forme tubulaire entre le couvercle de filtre (19) et l'entrée de filtre (11).

15. Dispositif de filtration (1) selon l'une des revendications précédentes, **caractérisé en ce que** le panier de filtration (20) est ouvert aux deux extrémités, notamment de forme allongée et/ou cylindrique.

16. Dispositif de pompage (100) comprenant une pompe d'alimentation (101) agencée entre une conduite d'aspiration (102) et une conduite de refoulement (103), et un dispositif de filtration (1) selon l'une des revendications précédentes, le panier de filtration (20) du dispositif de filtration (1) étant agencé dans la conduite d'aspiration (102).
